# EUROPEAN PATENT APPLICATION

(11) **EP 0 886 234 A1**
(43) Date of publication of application: **23.12.1998**
(21) Application number: 98111046.3
(22) Date of filing: 16.06.1998
(51) Int. Cl.: G06K 11/18

(54) **Method for correcting deformation of an image and apparatus thereof**

(30) Priority: 16.06.1997 JP 158321/97
(71) Applicant: YASHIMA ELECTRIC CO., Ltd., Kyoto-shi, Kyoto 601 (JP)
(72) Inventor: Taguchi, Toshio, Minami-ku, Kyoto 601-8384 (JP); Nakamura, Hiroki, Minami-ku, Kyoto 601-8384 (JP)
(74) Representative: Prüfer, Lutz H., Dipl.-Phys.

(57) **Abstract**

An apparatus including a pen body(2), a writing device held by the pen body(2), an image pick up device for picking up a image corresponding to a predetermined field of view which includes therein a leading edge(3) of the writing device and handwriting information on a piece of paper, a convex lens(4) for guiding the image to the image pick up device, and a laser projection device(5) on the pen body(2) for radiating a laser beam as a marker point(P) within the field of view(R), so that deformation of the picked up image is corrected based upon the location of the marker point(P) and the apparatus is decreased in its size, weight and cost.

## Description

### Background of The Invention

The present invention relates to a method for correcting deformation of an image and apparatus thereof. More particularly, the present invention relates to a method for correcting deformation of an image which includes handwriting written by a writing device on a paper or the like and is picked up, and an apparatus comprising such deformation correction function.

### Related Art

An input device, so called a handwriting detecting and storing device, including a writing device (ball point pen or the like) for writing a character, figure and the like on a recording medium (a paper or the like), and an image pick up means {an image pick up device such as a CCD (charge coupled device) and the like} for picking up a predetermined field of view which includes a leading edge of the writing device and handwriting information written on the recording medium, is known (Japanese Patent Publication No. Hei 5-278390, Japanese Patent Laid-Open Publication No. Hei 7-287635, Japanese Patent Laid-Open Publication No. Hei 8-30370, Japanese Patent Laid-Open Publication No. Hei 8-58286, and Japanese Patent Laid-Open Publication No. Hei 8-129443). The handwriting detecting and storing apparatus having the above arrangement picks up a handwriting written by the writing device following passage of time, and reproduces an entire handwriting from a group of picked small image data using a separate apparatus (for example, a computer).

When a character, figure and the like is written by the handwriting detecting and storing apparatus having the above arrangement, it is rare that the writing device is vertical with respect to a paper and performs a writing operation, and it is usual that the writing device is held by an inclination angle to some degree with respect to a paper and performs a writing operation. When the writing device is held by an inclination angle with respect to a paper, a deformation is generated within a small image which is picked up by using a convential optical lens and a CCD, because a difference in magnification exists between a near side and a far side with respect to the leading edge of the writing device due to a difference between objective distances. Therefore, the picked up small image should be corrected to be an image which is seen on a paper from a viewpoint which is vertical with respect to the paper so that an image having a uniform picking magnification with the entire region is obtained.

To realize the above requirement, a handwriting detecting and storing apparatus is proposed which detects an inclination angle of a writing device with respect to a paper face using an inclination sensor and the like which are separately provided and corrects deformation within an image based upon the detected inclination angle. When such handwriting detecting and storing apparatus is employed, the arrangement becomes complicated, the weight becomes great, the size becomes large and the cost becomes expensive. Therefore, it is difficult to provide a functional arrangement which is decreased in size and in weight to a handwriting detecting and storing apparatus, the functional arrangement correcting an image using an inclination sensor or the like.

The present invention was made in view of the above problems.

It is an object of the present invention to supply a novel method for correcting deformation within a picked up image and for decreasing a functional arrangement in size, in weight and in cost, and to supply a handwriting detecting and storing apparatus which includes the functional arrangement therein.

### Summary of The Invention

A method for correcting deformation of an image comprises the steps of:
applying a marker point to a view field for picking up an image,
picking up an image corresponding to the view field in which the marker point is included, and
correcting deformation within the image based upon a location of the marker point which appears within the picked up image.

When this method is employed, it is sufficient for correcting deformation within an image that the marker point appears within the view field for picking up an image. There is no need that an inclination angle of a writing device with respect to a recording medium such as a paper or the like is detected using an inclination sensor and the like. Therefore, a functional arrangement for correcting deformation of a picked up image can be provided to a handwriting detecting and storing apparatus, the functional arrangement decreasing in cost and in size, when the method is applied to the handwriting detecting and storing apparatus which picks up handwriting information.

An apparatus for correcting deformation of an image comprises :
a writing device for writing a character, figure and the like on a recording medium,
image pick up means for picking up an image within a predetermined view field which includes therein a leading edge of the writing device and handwriting information on the recording medium,
light beam radiating means for radiating a light beam within the predetermined view field, and
image deformation correcting means for correcting deformation within a picked up image based upon a location of the beam light which appears within the image picked up by the image pick up means.

When this apparatus is employed, a functional arrangement for performing the above method is provided therein. Therefore, a decrease in size, in weight and in cost of the apparatus is realized, and deformation within the picked up image is corrected.

### Brief Description of The Drawings

Figure 1(a) is a top view of a handwriting detecting and storing apparatus according to an embodiment of the present invention;
Figure 1(b) is a front view of the handwriting detecting and storing apparatus;
Figure 1(c) is a specific example of an image which is picked up under a condition that the handwriting detecting and storing apparatus is held to be vertical with respect to a paper face;
Figure 2(a) is a side view of the handwriting detecting and storing apparatus which is held at an inclination condition with respect to a paper face;
Figure 2(b) is a specific example of an image which is picked up under a condition that the handwriting detecting and storing apparatus is held to be inclined with respect to a paper face;
Figure 3(a) is a chart, representing a relationship between an inclination angle of a handwriting detecting and storing apparatus and a distance from a center of an image to a marker point within the image;
Figure 3(b) is a graph representing a relationship between an inclination angle of a handwriting detecting and storing apparatus and a distance from a center of an image to a marker point within the image;
Figures 4(a) through 4(e) are diagrams each representing a location of a marker pointer within an image which is picked up under a condition that a handwriting detecting and storing apparatus is inclined by an individual inclination angle;
Figures 4(f) through 4(j) are diagrams each representing coordinates of the corresponding location of the marker pointer;
Figures 5(a) is a top face view of a main body of a handwriting detecting and storing apparatus to which two laser projectors are provided;
Figure 5(b) is a top face view of a main body of a handwriting detecting and storing apparatus to which three laser projectors are provided; and
Figures 6(a) and 6(b) are diagrams useful in understanding a variation of a marker point in size within an image depending upon an inclination angle of a handwriting detecting and storing apparatus, and wherein Figure 6(a) is a side view of the handwriting detecting and storing apparatus and the marker point which are vertical with respect to a writing face, while Figure 6(b) is a side view of the handwriting detecting and storing apparatus and the marker point which are inclined by an inclination angle with respect to a writing face.

### Detailed Description of The Preferred Embodiments

Hereinafter, we explain embodiments of the present invention in detail by referring to the attached drawings.

The present invention has a characteristic point that correction operation is performed to correct deformation within a picked up image. The present invention also has an arrangement other than the correction section, the arrangement being similar to arrangements of the prior handwriting detecting and storing apparatus. Therefore, we will mainly explain the characteristic point.

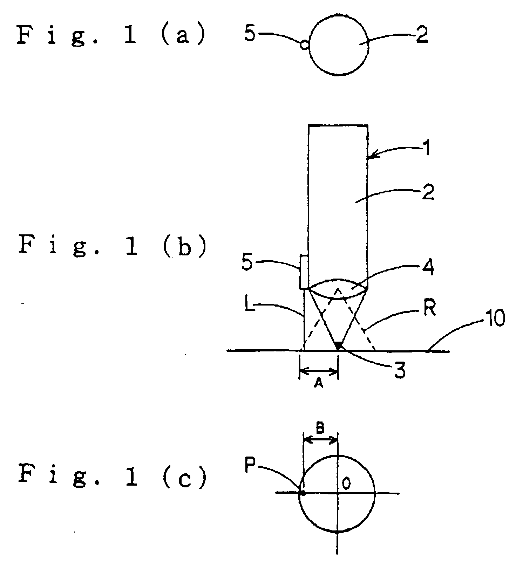

Fig. 1(a) is a top view of a handwriting detecting and storing apparatus according to an embodiment of the present invention, while Fig. 1(b) is a front view of the handwriting detecting and storing apparatus. The handwriting detecting and storing apparatus is schematically illustrated in Figs. 1(a) and 1(b).

The handwriting defecting and storing apparatus 1 comprises a pen body 2 having a column shape, a writing device ( for example, a ball point pen, and is illustrated as leading edge 3 ) which is held by the pen body 2, an image pick up section {for example, an image pick up device such as a charge coupled device ( CCD ) which is not illustrated} which picks up an image within a predetermined view field R on a recording medium ( for example, a paper face ) 10 which view field R includes the leading edge 3 of the writing device and handwriting information written on the recording medium 10, and a lens system ( comprises convex lens 4 mainly ) which guides an image within the predetermined view field R to the image pick up section. Further, the pen body 2 includes therein a storage section ( for example, a storage device ) and a power source ( for example, a battery ). The storage section stores image information which is picked up by the image pick up section. The power source drives the image pick up section and the storage section.

The writing device may not only be a writing device such as a ball point pen or the like which actually draws handwriting which is visually recognized, but also may be a writing device such as a write pen or the like which is used as an input device for a personal computer or the like which device draws handwriting which is not visually recognized, or may be a device such as a probe type device which inputs handwriting by sensing writing pressure, or the like. Further, the power source need not be included within the pen body. The electric power may be supplied from an outside power source through connection lines. The electric power may also be supplied from a body of an apparatus ( personal computer or the like ), when a handwriting detecting and storing apparatus is an apparatus such as a write pen or the like. Furthermore, the storage section may be provided at an exterior position to the pen body. That is, the storage section need not be provided in or on the pen body. In this case, a picked up image is stored by the storage section through connection lines or through wireless transmission which storage section is provided at an exterior position of the pen body.

The handwriting detecting and storing apparatus 1 of this embodiment includes a laser projector 5 that is a beam light radiating means for radiating a light beam to a view field R for picking up an image is provided at an outer face of the pen body 2 which has a column shape, and an image deformation correction means (not illustrated) for correcting deformation of an image is housed within the pen body 2 which means corrects deformation of an image based upon a location of a beam light within a picked up image. The laser projector 5 is provided to the pen body so that the laser projector 5 radiates a laser beam L in a direction which is parallel to a central axis of the pen body 2. But, the laser beam L may not be parallel to the central axis of the pen body 2. The provision position of the laser projector 5 and the radiation direction of the laser beam may be shifted when the laser beam L is radiated within the view field R for picking up an image.

When a character, figure or the like is written on a paper face (face of paper) 10 using the handwriting detecting and storing apparatus 1, and when a character, figure or the like is written under a condition that the handwriting detecting and storing apparatus 1 is vertical with respect to the paper face 10, as is illustrated in Figs. 1(b) ad 1(c), an image within a predetermined view field R is collected by the convex lens 4 and is picked up by a CCD which is provided within the pen body 2, the image including the leading edge 3 of the writing device and handwriting information written on the paper face 10. When the above operation is performed, a spot (marker point) P due to the laser beam L radiated from the laser projector 5 appears at an adjacent position to a boundary of the view field R for picking image, therefore an image within the view field R is picked up by the CCD, the image including the marker point P therein.

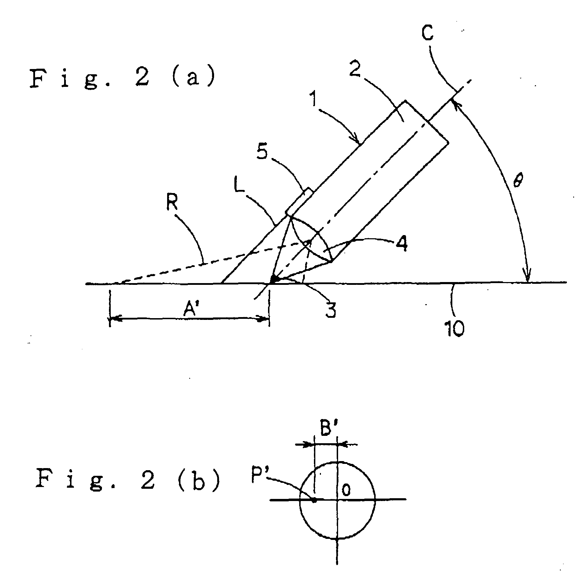

When it is supposed in Figs. 1(a), 1(b) and 1(c) that a distance between a position of the leading edge 3 of the writing device and the boundary of the view field R for picking image is determined to be A, and that a distance between the center (the position of the leading edge 3 of the writing device) O of the picked image and the marker point P is determined to be B, and when a character, figure or the like is written using the handwriting detecting and storing apparatus 1 which is inclined with respect to the paper face 10, the relationship between the handwriting detecting and storing apparatus 1 and the paper face 10 becomes a condition which is illustrated in Fig. 2(a), and the image including the marker point P becomes an image which is illustrated in Fig. 2(b).

When a character, figure or the like is written using the handwriting detecting and storing apparatus which is inclined a central axis C of the pen body 2 by an angle θ with respect to the paper face 10 as is illustrated in Fig. 2(a), a view field R for picking up an image becomes an inclined view field with respect to the paper face 10. Therefore, a portion of the view field is enlarged which portion exists on an apart side {left side in. Fig. 2(a)} with respect to the leading edge 3 of the writing device, and a distance A' between the leading edge 3 of the writing device and the boundary of the view field on the apart side with respect to the leading edge 3 of the writing device becomes longer than the distance A. Under this condition, a distance B' between the center O of the picked up image (a position of the leading edge 3 of the writing device) and the marker point P' becomes shorter than the distance B. That is, the location of the marker point changes from P to P' so that the marker point moves to closer location with respect to the center O of the picked up image by inclining the handwriting detecting and storing apparatus 1 with respect to the paper face for writing a character, figure or the like. The distance between the marker point and the center O of the picked up image is determined based upon the inclination angle θ of the handwriting detecting and storing apparatus 1. Therefore, a changing quantity of the location of the marker point can be detected, and the inclination angle θ is easily calculated based upon the absolute location (detected location) of the marker point.

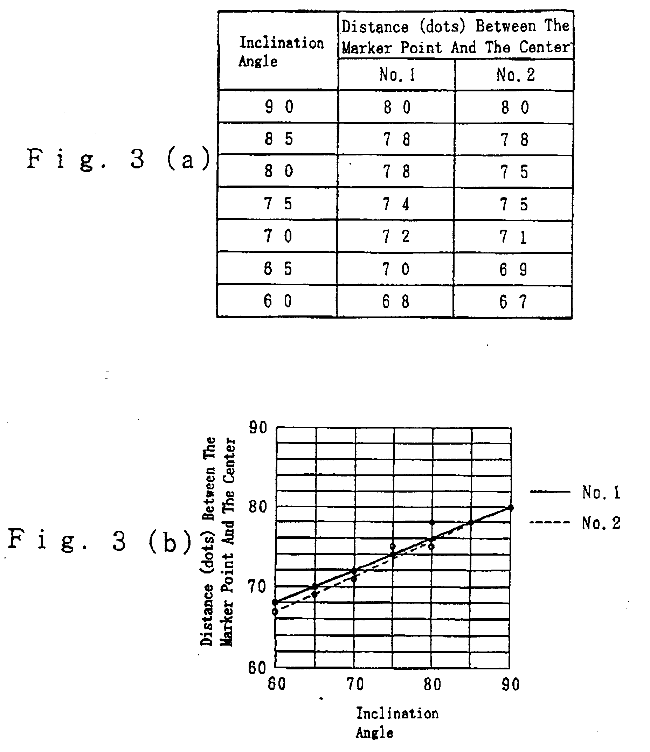

Fig. 3(a) is a chart representing experimental data which represent a relationship between an inclination angle of the handwriting detecting and storing apparatus and a distance (dots) between the marker point and the center O of the picked image, while Fig. 3(b) is a graph obtained by plotting the experimental data.

In Figs. 3(a) and 3(b), the inclination angle of 90 degrees corresponds to a condition in which the handwriting detecting and storing apparatus 1 is vertical with respect to the paper face 10. The chart and the graph were obtained by changing the inclination angle from vertical (an angle between the central axis and the paper face is 90 degrees) to 30 degrees from vertical (an angle between the central axis and the paper face is 60 degrees) by every 5 degrees and detecting the distance between the center of the picked image and the marker point. In Figs. 3(a) and 3(b), "No. 1" represents experimental data of one handwriting detecting and storing apparatus,while "No. 2" represents experimental data of another handwriting detecting and storing apparatus. The experimental data "No. 1" and the experimental data "No. 2" are different to some degree from one another. But, in the experimental data "No. 1" and "No. 2", the handwriting detecting and storing apparatus is inclined the more the distance between the marker point and the center of the picked up image is shortened. Therefore, it is understood that the inclination angle and the distance between the marker point and the center of the picked up image have a correlation relationship to one another.

The above description is explained in more detail.

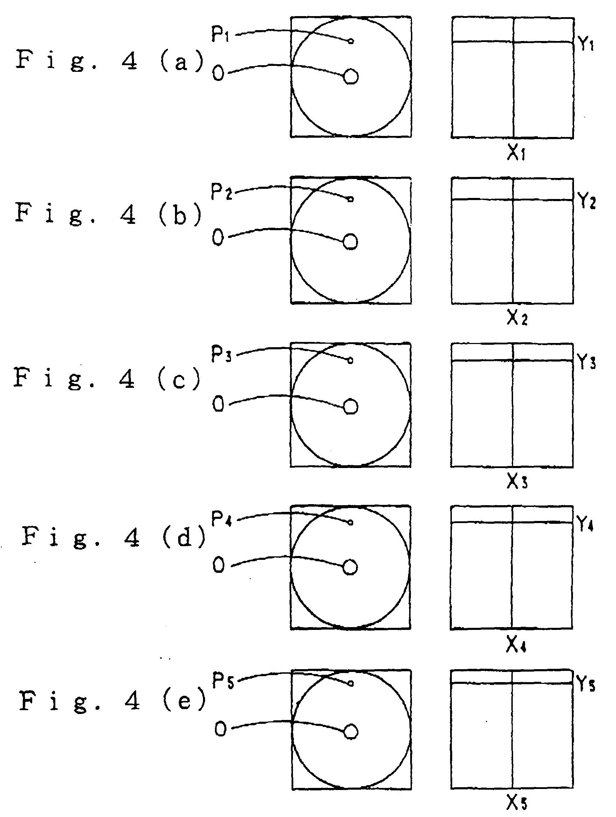

Figs. 4(a) through 4(e) represent picked up images, while Figs. 4(f) through 4(j) represent coordinates of the marker point P1-P5 within each picked up image of Figs. 4(a) through 4(e). Each picked up image corresponds to one of the conditions in which the handwriting detecting and storing apparatus is inclined at 10 degree increments from the ertical condition with respect to the paper face (an angle the between the central axis of the handwriting detecting and storing apparatus and the paper face is 90 degrees) to 40 degrees in the inclined condition (an angle between the central axis of the handwriting detecting and storing apparatus and the paper face is 50 degrees).

Fig. 4(e) is a picked up image which is picked up by determining the handwriting detecting and storing apparatus to be vertical with respect to the paper face (an angle between the central axis of the handwriting detecting and storing apparatus and the paper face is 90 degrees). When an inclination angle of the handwriting detecting and storing apparatus is changed in 10 degree increments from the vertical condition, a location of the marker point changes from P5 to P1 so that the marker point gradually approaches the center O of the picked image. Specific experimental coordinates data of the marker point corresponding to each inclination angle are as follows:
Inclination angle 40 degrees: X1=52, Y1=19
Inclination angle 30 degrees: X2=54, Y2=16
Inclination angle 20 degrees: X3=54, Y3=14
Inclination angle 10 degrees: X4=53, Y4=13
Inclination angle 0 degrees: X5=53, Y5=10

It is apparent-from the experimental coordinates data, X-coordinate data changes to some degree, and Y-coordinate data changes following the change of the inclination angle.

As is apparent from the foregoing, a location of the marker point within the picked up image changes in correspondence with an inclination angle of the handwriting detecting and storing apparatus. Therefore, an inclination angle of the handwriting detecting and storing apparatus is obtained from a distance between the marker point and the center of the picked up image. And, deformation of the picked up image is corrected based upon the obtained inclination angle. This correction operation is performed by image deformation correction means using correction software.

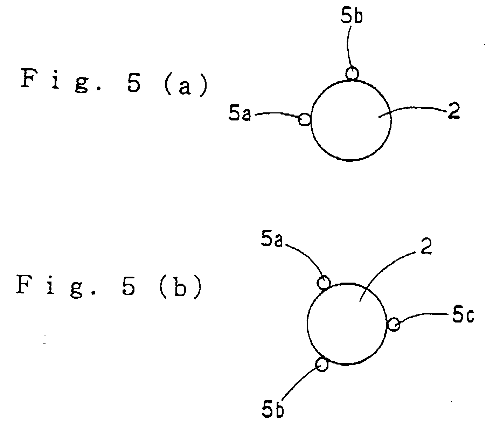

The handwriting detecting and storing apparatus 1 according to the above embodiment includes only one laser projector 5 which is provided on the pen body 2. The handwriting detecting and storing apparatus 1 may include two laser projectors 5a and 5b which are provided on the pen body 2, as is illustrated in Fig. 5(a). The laser projectors 5a and 5b are shifted by 90 degrees from one another with respect to the central axis of the handwriting detecting and storing apparatus 1 (or the pen body 2), so that an inclination angle in X-coordinate direction ad an inclination angle in Y-coordinate direction are separately detected. The handwriting detecting and storing apparatus 1 may include three laser projectors 5a, 5b and 5c which are provided on the pen body 2, as is illustrated in Fig. 5(b). The laser projectors 5a, 5b and 5c are shifted by the same angle (120 degrees) from one another with respect to the central axis of the pen body 2, so that an inclination in every direction is detected. Further, arrangements other than the above arrangements may be employed.

When the handwriting detecting and storing apparatus 1 is vertical with respect to the paper face 10, as is illustrated in Fig. 1(b), the marker point within the picked up image has a predetermined diameter. And, the marker point is decreased in size following the increase in inclination angle of the handwriting detecting and storing apparatus 1 (following the decrease in angle between the central axis C of the handwriting detecting and storing apparatus 1 and the paper face 10), as is illustrated in Fig. 2(b).

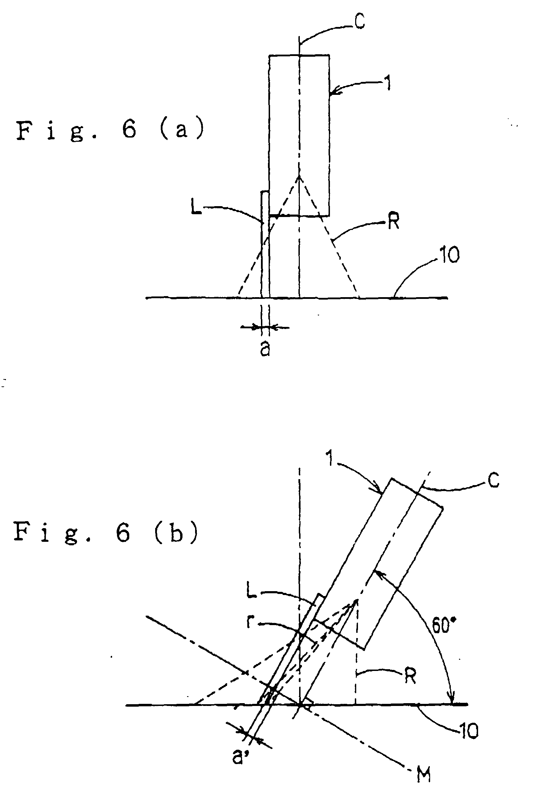

This operation is described by referring Figs. 6(a) and 6(b).

When it is supposed that a light beam width of the laser beam L radiated from the laser projector is determined to be a when the handwriting detecting and storing apparatus 1 is vertical with respect to the paper face 10, the diameter of the marker point within the picked image is a {refer to Fig. 6(a)}.

But, when the handwriting detecting and storing apparatus 1 is inclined so as to determine an angle between the central axis C of the handwriting detecting and storing apparatus 1 and the paper face 10 to be 60 degrees as is illustrated in Fig. 6(b), for example, deformation is generated in the picked up image based upon a difference in image magnification which difference is due to a difference in distance between the paper face 10 and the convex lens 4. Therefore, the light beam width changes from a to a', wherein a' is smaller than a, so that the diameter of the marker point within the picked up image becomes smaller than a. A decreasingly changing size of the marker point follows the increase in inclination angle of the handwriting detecting and storing apparatus 1. Therefore, it is preferable for correcting deformation of the picked up image accurately based on the correlation relationship of the change in diameter of the marker point and the inclination angle of the handwriting detecting and storing apparatus which is previously obtained, a diameter of the marker point corresponding to the inclination angle of the handwriting detecting and storing apparatus 1 is calculated, and coordinates of the ocation of the marker point is obtained with high accuracy.

Further, right-handed individuals usually write a character, figure or the like by inclining the handwriting detecting and storing apparatus by about 45 degrees in a left-forward direction. Therefore, it is sufficient for detecting an inclination angle of the handwriting detecting and storing apparatus accurately which is used by a right-handed person that only one laser projector is provided on the pen body 2 in an inclined condition by about 45 degrees in a left-lower direction with respect to the central axis of the pen body 2. Of course, when the handwriting detecting and storing apparatus is used by a left-handed person, it is sufficient that the arrangement is modified to suit a left-handed person.

Furthermore, when the marker point spoils the view which is due to the laser beam ad appears within the view field for picking up an image, an invisible light such as infrared rays, ultraviolet rays or the like may be radiated towards the paper face, the invisible light being detected by the CCD.

The above embodiment is described based upon the handwriting detecting and storing apparatus which includes therein the method for correcting deformation of an image. But, the method for correcting deformation of an image may be included in an ordinary camera, a camera which records an image as a digital signal and has become popular in recent years, so that an image picked up from an inclined front side with respect to a target is corrected to an image which corresponds an image which is picked up from a central front side with respect to a target, or an image picked up from a central front side with respect to a target is corrected to an image which corresponds an image which is picked up from an inclined front side with respect to a target. Therefore, the method for correcting deformation of an image can be applied to various apparatuses which have an image picking up function.

## Claims

1. A method for correcting deformation of an image comprising the steps of
providing a marker point(P) within a view field(R) for picking up the image;
picking up the image within the view field(R) which image includes the marker point(P); and
correcting deformation of the picked up image based upon a location of the marker point(P) within the picked up image.

2. The method as set forth in claim 1, correcting deformation of the picked up image is performed based upon a distance between the marker point(P) within the picked up image and a center(O) of the picked up image.

3. The method as set forth in claim 1, further comprising the step of writing handwriting on a writing medium(10) using a writing device to provide the image to be picked up.

4. The method as set forth in claim 1, wherein the providing step produces two or more marker points(P) within the view field(R).

5. An apparatus for correcting deformation of an image comprising
marker point providing means for providing a marker point(P) within a view field(R) for picking up the image;
picking up means for picking up the image within the view field(R) which image includes the marker point(P); and
correction means for correcting deformation of the picked up image based upon a location of the marker point(P) within the picked up image.

6. The apparatus as set forth in claim 5, wherein the correction means corrects deformation of the picked up image based upon a distance between the marker point(P) within the picked up image and a center(O) of the picked up image.

7. The apparatus as set forth in claim 5, further comprising a writing device for writing handwriting on a writing medium(10).

8. The apparatus as set forth in claim 5, wherein the marker point providing means includes two or more marker points(P) within the view field(R).
